(19) Europäisches Patentamt
European Patent Office
Office européen des brevets

(11) **EP 4 485 810 A1**

(12) **EUROPEAN PATENT APPLICATION**
published in accordance with Art. 153(4) EPC

(43) Date of publication:
**01.01.2025 Bulletin 2025/01**

(21) Application number: **22928710.7**

(22) Date of filing: **25.02.2022**

(51) International Patent Classification (IPC):
**H04B 7/024** (2017.01)        **H04B 7/0452** (2017.01)
**H04B 7/0456** (2017.01)

(52) Cooperative Patent Classification (CPC):
**H04B 7/024; H04B 7/0452; H04B 7/0456**

(86) International application number:
**PCT/JP2022/008081**

(87) International publication number:
**WO 2023/162184 (31.08.2023 Gazette 2023/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nippon Telegraph And Telephone
Corporation
Chiyoda-ku
Tokyo 100-8116 (JP)**

(72) Inventors:
• **ARAI Takuto
  Musashino-shi, Tokyo 180-8585 (JP)**

• **UCHIDA Daisei
  Musashino-shi, Tokyo 180-8585 (JP)**
• **IWAKUNI Tatsuhiko
  Musashino-shi, Tokyo 180-8585 (JP)**
• **WAI Shuki
  Musashino-shi, Tokyo 180-8585 (JP)**
• **KITA Naoki
  Musashino-shi, Tokyo 180-8585 (JP)**

(74) Representative: **Brevalex
Tour Trinity
1 B Place de la Défense
92400 Courbevoie (FR)**

(54) **WIRELESS COMMUNICATION METHOD, DISTRIBUTED ANTENNA SYSTEM, AND WIRELESS COMMUNICATION DEVICE**

(57)     A wireless communication method in a distributed antenna system including a base station and a plurality of antennas that communicates with one or more terminal stations by spatial multiplexing according to control of the base station, the wireless communication method including: calculating, for each candidate terminal station, a partial weight matrix based on channel information acquired between a plurality of antennas of the candidate terminal station to be subjected to communication by spatial multiplexing using two or more antennas among the plurality of antennas and the two or more antennas used for the spatial multiplexing; multiplying a transmission signal for the candidate terminal station by the calculated partial weight matrix for the candidate terminal station; and transmitting, to each candidate terminal station, the transmission signal for the candidate terminal station multiplied by the partial weight matrix for the candidate terminal station.

Fig. 2

# Description

Technical Field

The present invention relates to a wireless communication method, a distributed antenna system, and a wireless communication device.

Background Art

In a communication system using 5th generation (5G) or the like, a high frequency band of a millimeter wave band is used. In a future communication system such as 6G further evolved from 5G, use of a frequency band higher than that of 5G capable of securing a wider bandwidth is assumed in order to realize further increase in speed and capacity. A high frequency band is known to have a large propagation loss and high straightness, and a distributed antenna system has been studied in order to improve connectivity in covering a communication area (see, for example, Non Patent Literatures 1 and 2).

In the distributed antenna system, by performing single user multiple-input and multiple-output (SU-MIMO) or multi-user MIMO (MU-MIMO) using a plurality of antennas arranged in a distributed manner, it is possible to improve frequency utilization efficiency and improve communication capacity and throughput. In a case of performing communication by MIMO, it is generally assumed that channel state information (CSI) between a distributed antenna and a terminal station (user equipment (UE)) is acquired to reduce inter-stream interference, and a base station (BS) side performs precoding on a downlink and performs post-coding on an uplink.

Citation List

Non Patent Literature

Non Patent Literature 1: NTT DOCOMO, INC., "DOCOMO 6G White Paper 3.0 version", November 2021
Non Patent Literature 2: Uchida, Iwakuni, Kita, Onizawa, Kishiyama, Suyama, Nagata, Asai, "Distributed Antenna Systems using High-Frequency-Band targeting 6G Wireless Networks", IEICE technical report RCS2020-148, pp. 73-78, December 2020.

Summary of Invention

Technical Problem

In order to suppress interference between streams by precoding or post-coding in a distributed antenna system, it is not desirable to collect CSI between a fully distributed antenna and each terminal station from viewpoints of a band between the distributed antenna and the base station, an increase in processing load, and communication efficiency. This is more noticeable as the number of distributed antennas increases. Furthermore, when the number of streams that perform communication at the same time increases, a probability that a desired signal component is also suppressed by the interference suppression control by the precoding or post-coding increases, which may cause a decrease in communication capacity.

In view of the above circumstances, an object of the present invention is to provide a technology capable of efficiently reducing interference affecting communication capacity while reducing a control amount of spatial multiplexing under a situation where spatial multiplexing transmission is performed in a distributed antenna system.

Solution to Problem

One aspect of the present invention is a wireless communication method in a distributed antenna system including a base station and a plurality of antennas that communicates with one or more terminal stations by spatial multiplexing according to control of the base station, the wireless communication method including: calculating, for each candidate terminal station, a partial weight matrix based on channel information acquired between a plurality of antennas of the candidate terminal station to be subjected to communication by spatial multiplexing using two or more antennas among the plurality of antennas and the two or more antennas used for the spatial multiplexing; multiplying a transmission signal for the candidate terminal station by the calculated partial weight matrix for the candidate terminal station; and transmitting, to each candidate terminal station, the transmission signal for the candidate terminal station multiplied by the partial weight matrix for the candidate terminal station.

One aspect of the present invention is a distributed antenna system including: a base station; and a plurality of antennas that communicates with one or more terminal stations by spatial multiplexing according to control of the base station, in which the base station includes a precoding unit that calculates, for each candidate terminal station, a partial weight matrix based on channel information acquired between a plurality of antennas of the candidate terminal station to be subjected to communication by spatial multiplexing using two or more antennas among the plurality of antennas and the two or more antennas used for the spatial multiplexing, and multiplies a transmission signal for the candidate terminal station by the calculated partial weight matrix for the candidate terminal station, and the plurality of antennas transmits, to each candidate terminal station, the transmission signal for the candidate terminal station multiplied by the partial weight matrix for the candidate terminal station.

One aspect of the present invention is a wireless communication device including: a base station; and a plurality of antennas that communicates with one or more terminal stations by spatial multiplexing according to control of the base station, in which the wireless communication device includes a precoding unit that calculates, for each candidate terminal station to be subjected to communication by spatial multiplexing, a partial weight matrix based on channel information acquired between a plurality of antennas of the candidate terminal station to be subjected to communication by spatial multiplexing using two or more antennas among the plurality of antennas and the two or more antennas used for the spatial multiplexing, and multiplies a transmission signal for the candidate terminal station by the calculated partial weight matrix for the candidate terminal station, and the plurality of antennas transmits, to each candidate terminal station, the transmission signal for the candidate terminal station multiplied by the partial weight matrix for the candidate terminal station.

Advantageous Effects of Invention

According to the present invention, it is possible to efficiently reduce interference that affects communication capacity while reducing a control amount of spatial multiplexing in a situation where spatial multiplexing transmission is performed in a distributed antenna system.

Brief Description of Drawings

Fig. 1 is a diagram illustrating an example of a distributed antenna system according to the present embodiment.
Fig. 2 is a diagram illustrating a configuration example of a base station according to the present embodiment.
Fig. 3 is a flowchart illustrating a flow of processing performed by the base station in the present embodiment.

Description of Embodiments

Hereinafter, an embodiment of the present invention will be described with reference to drawings.

(Overview)

In a distributed antenna system 100 in the present embodiment, closed partial precoding is performed between antennas with large inter-stream interference (for example, streams to the same terminal station or the like). In the present embodiment, closed partial precoding between antennas with large inter-stream interference means performing precoding for each stream to the same terminal station with large inter-stream interference. That is, precoding is performed for each terminal station.

In a distributed antenna system in a high frequency band, on the premise that beamforming is performed from each distributed antenna in order to compensate for a high propagation loss, by focusing on the fact that there is a high possibility that inter-stream interference between different terminal stations can be generally avoided by the beamforming, and closing a weight used for MIMO spatial separation processing between streams in the same terminal station having a large interference influence and calculating the weight, it is possible to simplify control and stabilize communication capacity.

Hereinafter, specific configurations for achieving the above-described processing will be described.

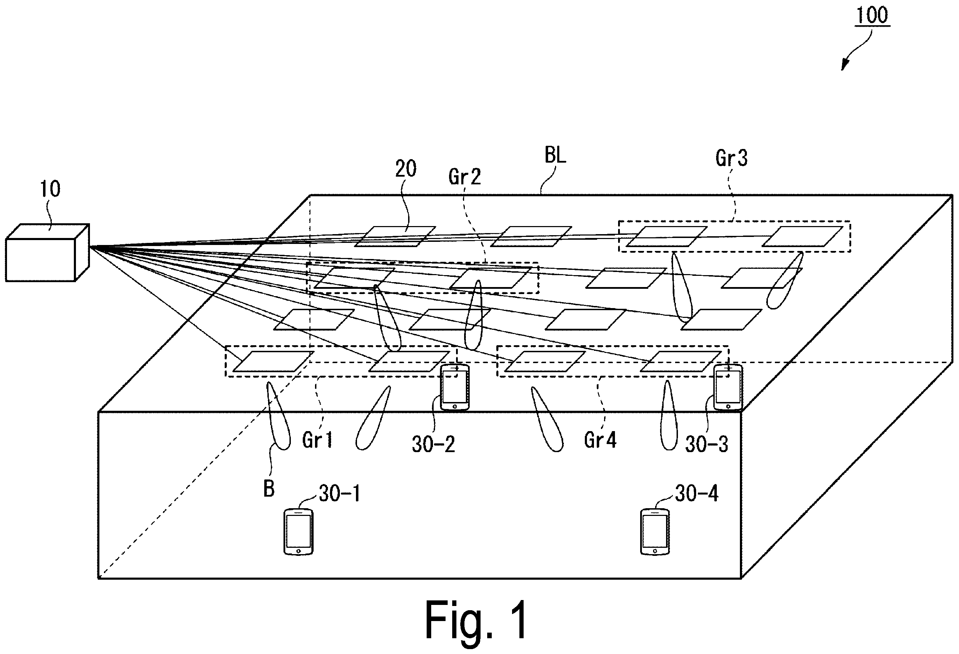

Fig. 1 is a diagram illustrating an example of the distributed antenna system 100 according to the present embodiment. The distributed antenna system 100 includes a base station 10 and a plurality of antennas 20. The base station 10 and the plurality of antennas 20 are connected by optical transmission lines. Communication between the base station 10 and the plurality of antennas 20 is performed by, for example, radio over fiber (RoF). The base station 10 and the plurality of antennas 20 are an aspect of a wireless communication device.

In the example illustrated in Fig. 1, the plurality of antennas 20 is installed on a ceiling in a building BL and communicates with a plurality of terminal stations 30-1 to 30-4 located in the building BL. For example, the plurality of antennas 20 is arranged apart from each other as illustrated in Fig. 1. Note that the numbers of antennas 20 and terminal stations 30 are not limited to the numbers illustrated in Fig. 1.

The base station 10 controls each antenna 20 arranged in a distributed manner by centralized control. The base station 10 realizes communication by SU-MIMO and MU-MIMO by controlling each antenna 20. Specifically, the base station 10 performs SU-MIMO by simultaneously transmitting a plurality of streams from the plurality of antennas 20 to the single terminal station 30, and performs MU-MIMO by simultaneously transmitting a plurality of streams from the plurality of antennas 20 to the plurality of terminal stations 30.

Note that the maximum number of streams that can be simultaneously communicated is determined by the maximum number of SU-MIMO layers and the maximum number of MU-MIMO layers. The base station 10 may use all the antennas 20 arranged in a distributed manner simultaneously for communication or may use only some of the antennas 20.

The base station 10 allocates the plurality of antennas 20 to perform communication for each terminal station 30. For example, Fig. 1 illustrates an example in which an antenna 20 indicated by a group Gr1 is allocated as an antenna to communicate with the terminal station 30-1, an antenna 20 indicated by a group Gr2 is allocated as an antenna to communicate with the terminal station 30-2, an antenna 20 indicated by a group Gr3 is allocated as an antenna to communicate with the terminal station 30-3, and an antenna 20 indicated by a group Gr4 is allocated as an antenna to communicate with the terminal station 30-4.

Each antenna 20 communicates with the terminal station 30. Each antenna 20 includes, for example, a plurality of array elements arranged two-dimensionally. The antenna 20 communicates with the terminal station 30 to be communicated by performing beamforming using the plurality of array elements to secure a gain in a high frequency band.

Each terminal station 30 includes one or more antennas and communicates with each antenna 20. The terminal station 30 including the plurality of antennas performs communication with the antenna 20 by SU-MIMO. The terminal station 30 may perform beamforming.

Here, partial precoding performed by the base station 10 will be described using communication from the base station 10 to the terminal station 30 (downlink) as an example. Assuming that $N_t$ is the total number of transmission antennas that perform simultaneous transmission on the base station 10 side by SU-MIMO and MU-MIMO, and that $N_r$ is the total number of reception antennas on the terminal station 30 side including the plurality of terminal stations 30, a channel matrix can be expressed as the following Expression (1).

[Math. 1]

$$\mathbf{H} = \begin{bmatrix} h_{11} & \cdots & h_{1N_t} \\ \vdots & \ddots & \vdots \\ h_{N_r 1} & \cdots & h_{N_r N_t} \end{bmatrix} \quad \cdots (1)$$

A transmission signal vector t from the base station 10 is represented by t = Ws using a precoding weight matrix W and a signal vector s. Here, the weight matrix W and the signal vector s can be expressed as the following Expression (2).

[Math. 2]

$$\mathbf{W} = \begin{bmatrix} \mathbf{W}_1 & \cdots & 0 \\ \vdots & \ddots & \vdots \\ 0 & \cdots & \mathbf{W}_{N_{UE}} \end{bmatrix} \quad \cdots (2)$$

$$\mathbf{s} = \begin{bmatrix} s_1 \\ \vdots \\ s_{N_t} \end{bmatrix}$$

In Expression (2), $N_{UE}$ represents the number of terminal stations 30 that simultaneously communicate with the base station 10 by MU-MIMO. As described above, the precoding weight matrix W is a matrix in which $N_{UE}$ partial weight matrices are diagonally arranged. This partial weight matrix is a weight matrix calculated for each terminal station 30 using a closed channel matrix between transmission/reception antennas allocated to the same terminal station 30. Therefore, the partial weight matrix means that only interference between streams allocated to the same terminal station 30 is considered, and interference with streams allocated to the other terminal stations 30 is not considered.

A partial weight matrix $W_n$ of an n-th (n is an integer of 1 or more) terminal station 30 is expressed as, for example, the following Expression (3) using a channel matrix $H_n$ between the antenna 20 that performs stream transmission to the terminal station 30 and the antenna of the terminal station 30.
[Math. 3]

$$ \boldsymbol{W_n} = \mathbf{H}_n^H \left( \mathbf{H}_n \mathbf{H}_n^H \right)^{-1} \qquad \cdots (3) $$

Expression (3) indicates a precoding weight based on a zero forcing (ZF) standard. For calculation of the precoding weight, other weight generation standards such as maximum ratio combining transmission (MRT) and a minimum mean square error (MMSE) standard may be used, or codebook-based weight selection may be performed.

As described above, the partial weight matrix $W_n$ expressed by Expression (3) does not consider the interference with the streams allocated to the other terminal stations 30, and thus interference from streams for the other terminal stations 30 occurs. However, when it is assumed that the beamforming using the plurality of elements is performed in order to secure the gain in the high frequency band, the interference from the streams for the other terminal stations 30 can be expected to be relatively small due to beam directivity.

Therefore, the base station 10 according to the present embodiment calculates the partial weight matrix $W_n$ for each terminal station 30 and multiplies the transmission signal by the calculated partial weight matrix $W_n$, thereby performing closed partial precoding between antennas having large inter-stream interference.

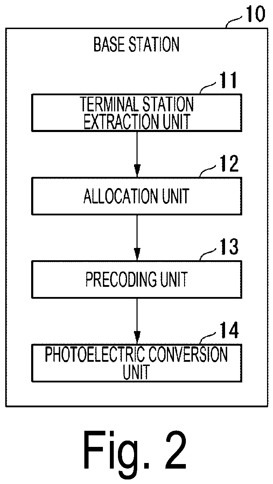

Fig. 2 is a diagram illustrating a configuration example of the base station 10 according to the present embodiment. Note that Fig. 2 illustrates only a configuration related to partial precoding processing that is a feature of the present invention. The base station 10 includes a terminal station extraction unit 11, an allocation unit 12, a precoding unit 13, and a photoelectric conversion unit 14.

The terminal station extraction unit 11 extracts terminal stations 30 that are candidates for spatial multiplexing by MU-MIMO (hereinafter referred to as "candidate terminal stations"). Depending on various types of scheduling, a method of extracting the candidate terminal stations may be any of a method of selecting the candidate terminal stations based on an index such as a rank indicator (RI), a method of selecting the candidate terminal stations based on a proportional fair (PF) standard, a method of selecting the candidate terminal stations based on reception power, and a method of selecting the terminal stations 30 such that interference between the terminal stations 30 is reduced by a positional relationship or the like. Examples of the method of selecting the candidate terminal stations based on the reception power include a method of checking reception power of each terminal station 30 and selecting terminal stations 30 in order from terminal stations having higher reception power, and a method of selecting terminal stations 30 having close reception power.

The allocation unit 12 determines allocation of the antennas 20 that communicate with the candidate terminal station and the number of SU-MIMO layers for each candidate terminal station extracted by the terminal station extraction unit 11. The allocation of the antennas 20 and the number of SU-MIMO layers may be determined by allocating them to round-robin for Capability of the base station 10, or may be determined on the basis of indices such as RI and reception power.

The precoding unit 13 calculates a partial weight matrix $W_n$ for each terminal station 30-n that performs SU-MIMO. The precoding unit 13 multiplies a transmission signal to be transmitted to the terminal station 30-n by the calculated partial weight matrix $W_n$. The calculation of the partial weight matrix $W_n$ in the precoding unit 13 uses CSI acquired between an antenna of the candidate terminal station and the antenna 20 allocated to the candidate terminal station. That is, the precoding unit 13 calculates a closed partial weight matrix $W_n$ for each candidate terminal station. For example, when there are the terminal stations 30-1 and 30-2 as the candidate terminal stations, the precoding unit 13 calculates a partial weight matrix Wi based on CSI acquired between an antenna of the terminal station 30-1 and the antenna 20 allocated to the terminal station 30-1, and calculates a partial weight matrix $W_2$ based on CSI acquired between an antenna of the terminal station 30-2 and the antenna 20 allocated to the terminal station 30-2.

The photoelectric conversion unit 14 converts each transmission signal multiplied by the partial weight matrix $W_n$ for each terminal station 30 by the precoding unit 13 into an optical signal and transmits the optical signal to the antenna 20.

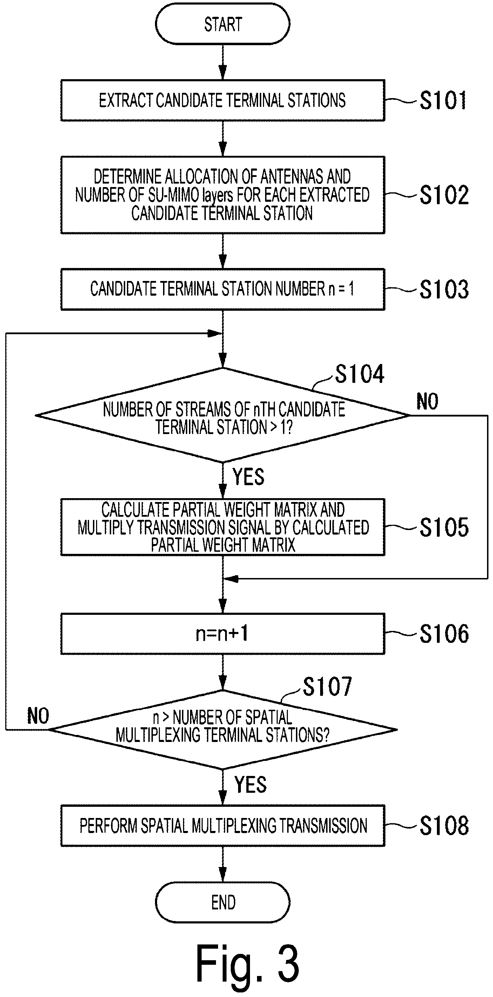

Fig. 3 is a flowchart illustrating a flow of processing performed by the base station 10 in the present embodiment.

The terminal station extraction unit 11 extracts candidate terminal stations (step S101). In the following description, the number of candidate terminal stations extracted by the terminal station extraction unit 11 is referred to as the number of spatial multiplexing terminal stations. The allocation unit 12 determines allocation of the antennas 20 and the number of SU-MIMO layers for each extracted candidate terminal station (step S102). Through this processing, one or more antennas 20 are allocated and the number of streams between the allocated antennas 20 and the candidate terminal station is determined for each candidate terminal station. The allocation unit 12 outputs identification information on the allocated antennas 20 and information on the number of SU-MIMO layers for each determined candidate terminal station to the precoding unit 13.

The number of streams of the candidate terminal station that performs SU-MIMO is two or more, and the number of streams of the candidate terminal station that does not perform SU-MIMO is one. Note that the processing in step S102 may be performed together with scheduling at the time of candidate terminal station extraction in step S101.

The precoding unit 13 assigns a number to each candidate terminal station. For example, the precoding unit 13 sequentially assigns numbers from 1 as candidate terminal station numbers to the candidate terminal stations. The precoding unit 13 substitutes 1 for a candidate terminal station number n (step S103). The precoding unit 13 determines whether or not the number of streams of the nth candidate terminal station is larger than 1 (step S104). When the number of streams is larger than 1, the terminal station 30 performs SU-MIMO.

Since n is 1 at the start of processing, for example, the precoding unit 13 refers to information on the number of SU-MIMO layers corresponding to the first candidate terminal station among the information output from the allocation unit 12, and determines whether or not the number of streams of the first candidate terminal station is larger than 1.

When determining that the number of streams of the nth candidate terminal station is greater than 1 (YES in step S104), the precoding unit 13 generates a partial weight matrix $W_n$ based on CSI between an antenna of the nth candidate terminal station and the antenna 20 allocated to the nth candidate terminal station among the information output from the allocation unit 12. For example, the precoding unit 13 calculates a partial weight matrix Wi based on CSI between an antenna of the first candidate terminal station and the antenna 20 allocated to the first candidate terminal station among the information output from the allocation unit 12.

The precoding unit 13 multiplies a transmission signal corresponding to the antenna 20 allocated to the nth candidate terminal station by the calculated partial weight matrix $W_n$ (step S105). Then, the precoding unit 13 adds 1 to n (step S106).

The precoding unit 13 determines whether or not a value of n is larger than the number of spatial multiplexing terminal stations (step S107). When determining that the value of n is equal to or less than the number of spatial multiplexing terminal stations (NO in step S107), the precoding unit 13 executes processing of step S104.

On the other hand, when the precoding unit 13 determines that the value of n is larger than the number of spatial multiplexing terminal stations (YES in step S107), the precoding unit 13 outputs each transmission signal multiplied by the partial weight matrix $W_n$ for each candidate terminal station to the photoelectric conversion unit 14. The photoelectric conversion unit 14 performs spatial multiplexing transmission by converting each transmission signal multiplied by the partial weight matrix $W_n$ for each candidate terminal station output from the precoding unit 13 into an optical signal and transmitting the optical signal to each antenna 20 (step S108). Each antenna 20 converts the optical signal output from the base station 10 into an electrical signal, then converts the electrical signal into a radio signal, and performs spatial multiplexing transmission to the candidate terminal station.

In the processing of step S 104, when the precoding unit 13 determines that the number of streams of the nth candidate terminal station is 1 (NO in step S104), the precoding unit 13 performs processing of step S106.

In the distributed antenna system 100 configured as described above, it is possible to realize stable communication capacity by efficiently reducing interference that greatly affects the communication capacity while suppressing a control amount of CSI acquisition, weight generation, control signal transmission between the base station 10 and the antenna 20, and the like when performing MIMO.

Modification examples of the distributed antenna system 100 will be described.

(Modification Example 1)

Although the configuration in the downlink from the base station 10 to the terminal station 30 has been described in the above embodiment, the above processing in the distributed antenna system 100 is also applicable to an uplink from the terminal station 30 to the base station 10. For example, the distributed antenna system 100 may perform SU-MIMO by simultaneously transmitting a plurality of streams from the single terminal station 30 to the plurality of antennas 20, and may perform MU-MIMO by simultaneously transmitting a plurality of streams from the plurality of terminal stations 30 to the plurality of antennas.

In this case, when the base station 10 calculates a partial weight matrix $W_n$ at the time of post-coding on the uplink, the partial weight matrix $W_n$ of the terminal station 30 is calculated on the basis of the following Expression (4).

[Math. 4]

$$W_n = (\mathbf{H}_n^H \mathbf{H}_n)^{-1} \mathbf{H}_n^H \qquad \cdots (4)$$

(Modification Example 2)

In the above embodiment, the configuration in which the base station 10 and the plurality of antennas 20 are connected by the optical transmission lines has been described. However, the base station 10 and the plurality of antennas 20 may be connected by transmission lines through which electricity passes, such as coaxial cables. In such a configuration, communication between the base station 10 and the plurality of antennas 20 is performed via an electrical signal. Therefore, the base station 10 does not include the photoelectric conversion unit 14, and transmits each transmission signal multiplied by the partial weight matrix $W_n$ for each terminal station 30 by the precoding unit 13 to the antenna 20 as an electrical signal.

(Modification Example 3)

In the above embodiment, the configuration in which the antenna 20 is allocated to each extracted candidate terminal station after the candidate terminal station is extracted by scheduling has been described. However, selection of the terminal station (scheduling) and allocation of the antenna 20 (connected antenna selection of the terminal station) may be performed in reverse order. Usually, a case where the candidate terminal station has been already connected to one of the antennas 20 (sub-array) is also assumed. Therefore, first, the allocation unit 12 allocates the antenna 20 to each candidate terminal station, and then the terminal station extraction unit 11 extracts the candidate terminal station to which the antenna 20 is allocated. For example, the allocation unit 12 may directly allocate or change the antenna 20 already connected to the candidate terminal station. The allocation unit 12 determines the number of SU-MIMO layers when the antennas 20 are allocated or after the candidate terminal stations are extracted. The subsequent processing (for example, processing after step S103) is similar to that of the above-described embodiment.
Although the embodiment of the present invention has been described in detail with reference to the drawings, the specific configuration is not limited to the embodiment, and includes design and the like within a range without departing from the gist of the present invention.

Industrial Applicability

The present invention can be applied to a wireless communication system using MIMO.

Reference Signs List

10    Base station

20    Antenna

30    Terminal station

11    Terminal station extraction unit

12    Allocation unit

13    Precoding unit

14    Photoelectric conversion unit

**Claims**

1. A wireless communication method in a distributed antenna system including a base station and a plurality of antennas that communicates with one or more terminal stations by spatial multiplexing according to control of the base station, wherein

the base station includes a precoding unit configured to calculate, for each candidate terminal station, a partial weight matrix based on channel information acquired between a plurality of antennas of the candidate terminal station to be subjected to communication by spatial multiplexing using two or more antennas among the plurality of antennas and the two or more antennas used for the spatial multiplexing, and

multiply a transmission signal for the candidate terminal station by the calculated partial weight matrix for the candidate terminal station, and
the plurality of antennas transmits, to each candidate terminal station, the transmission signal for the candidate terminal station multiplied by the partial weight matrix for the candidate terminal station.

2. The wireless communication method according to claim 1, wherein

the base station
determines the number of antennas to be used for the spatial multiplexing for the candidate terminal station, and
generates the partial weight matrix for the candidate terminal station based on the channel information between the determined number of antennas among the plurality of antennas of the candidate terminal station and the determined number of antennas among the plurality of antennas allocated to the candidate terminal station.

3. A distributed antenna system comprising: a base station; and a plurality of antennas that communicates with one or more terminal stations by spatial multiplexing according to control of the base station, wherein

the base station includes a precoding unit configured to calculate, for each candidate terminal station, a partial weight matrix based on channel information acquired between a plurality of antennas of the candidate terminal station to be subjected to communication by spatial multiplexing using two or more antennas among the plurality of antennas and the two or more antennas used for the spatial multiplexing, and multiply a transmission signal for the candidate terminal station by the calculated partial weight matrix for the candidate terminal station, and
the plurality of antennas
transmits, to each candidate terminal station, the transmission signal for the candidate terminal station multiplied by the partial weight matrix for the candidate terminal station.

4. A wireless communication device comprising: a base station; and a plurality of antennas that communicates with one or more terminal stations by spatial multiplexing according to control of the base station, wherein

the wireless communication device
includes a precoding unit configured to calculate, for each candidate terminal station to be subjected to communication by spatial multiplexing, a partial weight matrix based on channel information acquired between a plurality of antennas of the candidate terminal station to be subjected to communication by spatial multiplexing using two or more antennas among the plurality of antennas and the two or more antennas used for the spatial multiplexing, and multiply a transmission signal for the candidate terminal station by the calculated partial weight matrix for the candidate terminal station, and
the plurality of antennas
transmits, to each candidate terminal station, the transmission signal for the candidate terminal station multiplied by the partial weight matrix for the candidate terminal station.

Fig. 1

EP 4 485 810 A1

Fig. 2

START

EXTRACT CANDIDATE TERMINAL STATIONS — S101

DETERMINE ALLOCATION OF ANTENNAS AND NUMBER OF SU-MIMO layers FOR EACH EXTRACTED CANDIDATE TERMINAL STATION — S102

CANDIDATE TERMINAL STATION NUMBER n = 1 — S103

S104
NUMBER OF STREAMS OF nTH CANDIDATE TERMINAL STATION > 1? — NO

YES

CALCULATE PARTIAL WEIGHT MATRIX AND MULTIPLY TRANSMISSION SIGNAL BY CALCULATED PARTIAL WEIGHT MATRIX — S105

n=n+1 — S106

S107
NO — n > NUMBER OF SPATIAL MULTIPLEXING TERMINAL STATIONS?

YES

PERFORM SPATIAL MULTIPLEXING TRANSMISSION — S108

END

# Fig. 3

<div align="center">

**INTERNATIONAL SEARCH REPORT**

</div>

| International application No. |
| --- |
| **PCT/JP2022/008081** |

**A. CLASSIFICATION OF SUBJECT MATTER**

*H04B 7/024*(2017.01)i; *H04B 7/0452*(2017.01)i; *H04B 7/0456*(2017.01)i
FI: H04B7/024; H04B7/0452 100; H04B7/0456 100

According to International Patent Classification (IPC) or to both national classification and IPC

**B. FIELDS SEARCHED**

Minimum documentation searched (classification system followed by classification symbols)

H04B7/024; H04B7/0452; H04B7/0456

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | 丸田 一輝 他, 高周波数帯Massive MIMOにおけるサブアレー時間軸ビームフォーミングによるマルチユーザ並列伝送の検討, 電子情報通信学会2016年総合大会講演論文集 通信1, 2016, page 438, B-5-45, non-official translation (MARUTA, Kazuki et al. A Study on Multiuser Parallel Transmission by Sub-array Time Domain Beamforming in High Frequency Band Massive MIMO. Proceedings of the 2016 IEICE General Conference, Communication 1.)<br>sections 1-3, table 1, fig. 1 | 1, 3, 4 |
| Y | | 2 |
| Y | WO 2015/079726 A1 (NEC CORP.) 04 June 2015 (2015-06-04)<br>abstract, paragraphs [0002]-[0007], fig. 6-10 | 2 |
| Y | 新井拓人 他, 高周波数帯分散アンテナシステムにおけるストリーム配分の一検討, 電子情報通信学会2021年総合大会講演論文集 通信1, March 2021, page 283, B-5-7, non-official translation (ARAI, Takuto et al. A Study on Stream Allocation in High Frequency Band Distributed Antenna System. Proceedings of the 2021 IEICE General Conference, Communication 1.)<br>sections 1, 2, fig. 1, table 1 | 2 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 May 2022** | **31 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/008081** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2017-38197 A (NIPPON TELEGR. & TELEPH. CORP.) 16 February 2017 (2017-02-16) | 1-4 |
| A | WO 2018/159215 A1 (NTT DOCOMO, INC.) 07 September 2018 (2018-09-07) | 1-4 |
| A | JP 2010-193189 A (NIPPON TELEGR. & TELEPH. CORP.) 02 September 2010 (2010-09-02) | 1-4 |

Form PCT/ISA/210 (second sheet) (January 2015)

INTERNATIONAL SEARCH REPORT
Information on patent family members

| International application No. |
| --- |
| **PCT/JP2022/008081** |

| Patent document cited in search report | Publication date (day/month/year) | Patent family member(s) | Publication date (day/month/year) |
| --- | --- | --- | --- |
| WO 2015/079726 A1 | 04 June 2015 | US 2016/0248495 A1 abstract, paragraphs [0002]-[0 007], fig. 6-10 | |
| JP 2017-38197 A | 16 February 2017 | (Family: none) | |
| WO 2018/159215 A1 | 07 September 2018 | US 2020/0015173 A1 JP 2018-148313 A | |
| JP 2010-193189 A | 02 September 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- DOCOMO 6G White Paper 3.0 version. NTT DOCOMO, INC., November 2021

- **UCHIDA** ; **IWAKUNI** ; **KITA** ; **ONIZAWA** ; **KISHIYAMA** ; **SUYAMA** ; **NAGATA** ; **ASAI**. Distributed Antenna Systems using High-Frequency-Band targeting 6G Wireless Networks. *IEICE technical report RCS2020-148*, December 2020, 73-78